# EUROPÄISCHE PATENTSCHRIFT

(11) **EP 0 499 104 B1**
(45) Veröffentlichungstag und Bekanntmachung des Hinweises auf die Patenterteilung: **19.07.1995**
(21) Anmeldenummer: 92101660.6
(22) Anmeldetag: 01.02.1992
(51) Int. Cl.: F04D 25/08, F04D 29/58, B60H 1/00

(54) **Klimaanlage**
Air-conditioning system
Unité de conditionnement d'air

(30) Priorität: 09.02.1991 DE 4104034
(43) Veröffentlichungstag der Anmeldung: 19.08.1992
(73) Patentinhaber: Adam Opel Aktiengesellschaft, 65428 Rüsselsheim (DE); General Motors Espana, S.A., Figueruelas (Zaragoza) (ES)
(72) Erfinder: Köhler, Reinhard, Dipl.-Ing., W-6086 Riedstadt (DE); Stephan, Bernd, Dipl.-Ing. (FH), W-6550 Bad Kreuznach (DE); Seipel, Volker, Dipl.-Ing., W-6090 Rüsselsheim (DE)
(74) Vertreter: Bergerin, Ralf, Dipl.-Ing.

(56) Entgegenhaltungen:
- DE-C- 632 663
- FR-A- 2 412 976
- GB-A- 1 031 646
- US-A- 2 325 221
- US-A- 2 693 312
- US-A- 3 733 150

## Beschreibung

Die Erfindung betrifft eine Klimaanlage mit einem Gebläse, bei der in einem zum Lufteinlaß führenden Luftkanal ein Verdampfer zum Kühlen der angesaugten Luft angeordnet ist und bei der das Gebläse sowohl einen Hauptluftstrom als auch einen Kühlluftstrom für einen Elektromotor des Gebläses fördert.

Eine Klimaanlage der vorstehenden Art ist in der FR-A-24 12 976 beschrieben. Es sollen Probleme gelöst werden, die bei der Kühlung des Elektromotors, der das Gebläse antreibt, bestehen. In einem Gehäuse der Klimaanlage wird sowohl der Elektromotor als auch das Gebläse untergebracht. Durch die Art und Weise der Gehäusegestaltung wird eine Luftzirkulation zwischen einer den Elektromotor enthaltenden Zelle und einem das Gebläse enthaltenden Gehäuseabschnitt erreicht. Der Kühlluftstrom, der den Elektromotor passiert hat, also erwärmt ist, wird in die Atmosphäre geleitet. Die Ausbildung des Gehäuses ist recht aufwendig und es ist eine Vermischung des Kühlluftstromes mit erwärmter Luft möglich. Des weiteren ist es von Nachteil, die erwärmte Luft einfach ins Freie zu leiten. Dies ist zwar möglich, wenn die Klimaanlage in einem Motorraum eines Kraftfahrzeuges angeordnet ist, führt jedoch zu einer Erwärmung des Fahrgastraumes, wenn die Klimaanlage in diesem untergebracht wird. Das ist unerwünscht und mindert den möglichen Kühleffekt der Klimaanlage. Als Abhilfe wären lange Luftleitungen für die erwärmte Luft vorzusehen, die aber den Aufwand erhöhen und das notwendige Druckgefälle verringern.

Ein Gebläse, daß ebenfalls sowohl einen Hauptluftstrom als auch einen Kühlluftstrom fördert, ist in der US-A-26 93 312 beschrieben. Hier sind zwei Gebläseradbereiche durch eine Trennwand innerhalb eines Gehäuses voneinander abgegrenzt. Von einem Hauptbereich des Gebläserades wird Luft von einem Lufteinlaß zu einem Luftauslaß gefördert. Ein Nebenbereich des Gebläserades saugt Kühlluft durch einen Elektromotor und gibt die erwärmte Luft durch Öffnungen in die Umgebung ab.

Ein Gebläse und eine Klimaanlage der vorstehenden Art sind in der DE-A-33 02 363 beschrieben. Die in dieser Schrift gezeigte und in der Praxis allgemein eingesetzte Methode der Kühlung des Elektromotors durch einen vom Gebläserad erzwungenen Kühlluftstrom ist sehr kostengünstig zu verwirklichen. Nachteilig bei den bekannten Gebläsen und Klimaanlagen ist es, daß der Kühlluftstrom nach dem Passieren des Elektromotors wieder mit dem Hauptluftstrom vermischt wird. Dadurch ergibt sich zwangsläufig eine gegenüber der Lufteintrittstemperatur erhöhte Luftaustrittstemperatur, was insbesondere bei Klimaanlagen oder Belüftungsanlagen unerwünscht ist.

Um diesen Nachteil zu vermeiden, könnte man einen üblichen, mittels eines separaten Gebläses gekühlten Elektromotor einsetzen, dessen Abluft separat vom Hauptluftstrom abgeführt wird. Ein solches Gebläse wäre jedoch wesentlich aufwendiger, so daß es aus Kostengründen vielfach nicht in Frage kommt.

Der Erfindung liegt das Problem zugrunde, eine Klimaanlage der eingangs genannten Art so auszubilden, daß der Elektromotor des Gebläses auf möglichst einfache Weise gekühlt werden kann, ohne daß es zu einer Erwärmung des Hauptluftstromes kommt. Mit der Klimaanlage soll damit eine möglichst niedrige Luftaustrittstemperatur zu erreichen sein.

Das genannte Problem wird erfindungsgemäß dadurch gelöst, daß ein Gebläsegehäuse einen vom Hauptluftaustritt separaten Kühlluftaustritt aufweist und ein Gebläserad entsprechend einen Kühlluftförderbereich aufweist, der vom Hauptluftförderbereich getrennt ist. Die erwärmte Kühlluft wird vor eine Einlaßseite eines Verdampfers geführt.

Durch diese sehr einfache Ausbildung des Gebläses kann es den zur Kühlung seines Elektromotors erforderlichen Kühlluftstrom fördern, ohne daß es durch die vom Kühlluftstrom aufgenommene Wärme des Elektromotors oder mitgekühlten, elektrischen Widerständen zu einer Erwärmung des Hauptluftstromes des Gebläses kommt. Dadurch eignet sich das Gebläse insbesondere für solche Anwendungsfälle, bei denen eine Erwärmung der von ihm geförderten Luft nachteilig ist, wie dies bei Klimaanlagen der Fall ist.

Eine vorteilhafte Ausgestaltung des Gebläses, welches als Radialgebläse ausgebildet ist und für den Hauptluftstrom einen axialen Lufteinlaß in einer Stirnfläche des Gehäuses und einen tangentialen Luftauslaß aufweist, zeichnet sich dadurch aus, daß die Kühlluftzufuhr und die Hauptluftzufuhr von verschiedenen Stirnseiten des Gebläserades erfolgt und das Gebläserad eine scheibenförmige Trennwand zur Trennung des Kühlluftförderbereiches und des Hauptluftförderbereiches aufweist und daß entsprechend in der Mantelfläche des Gehäuses neben dem Luftauslaß für die Hauptluft der Kühlluftauslaß angeordnet ist. Ein solches Gebläse ist ganz besonders einfach ausgebildet.

Die Erfindung kann jedoch auch bei Klimaanlagen mit zweiflutigen Gebläsen Anwendung finden. Ein solches zweiflutiges Radialgebläse, welches an gegenüberliegenden Stirnseiten des Gehäuses jeweils einen axialen Lufteinlaß für den Hauptluftstrom und an einer Stirnseite zusätzlich einen Einlaß für den Kühlluftstrom aufweist, zeichnet sich erfindungsgemäß dadurch aus, daß das Gebläserad mit Abstand zueinander zwei scheibenförmige Trennwände zur Trennung des Kühlluftbereiches von den Hauptluftbereichen aufweist und daß entsprechend in der Mantelfläche des Gehäuses zwischen den Trennwänden der Kühlluftauslaß vorgesehen ist.

Die Erfindung läßt zahlreiche Ausführungsformen zu. Zur weiteren Verdeutlichung ihres Grundprinzips sind zwei Gebläse und eine erfindungsgemäße Klimaanlage in der Zeichnung dargestellt und werden nachfolgend beschrieben. Die Zeichnung zeigt in
- Fig. 1: einen Längsschnitt durch ein Gebläse,
- Fig. 2: eine Seitenansicht des Gebläses nach Figur 1,
- Fig. 3: einen Längsschnitt durch eine zweite Ausführungsform des Gebläses,
- Fig. 4: einen schematischen Längsschnitt durch eine Klimaanlage nach der Erfindung.

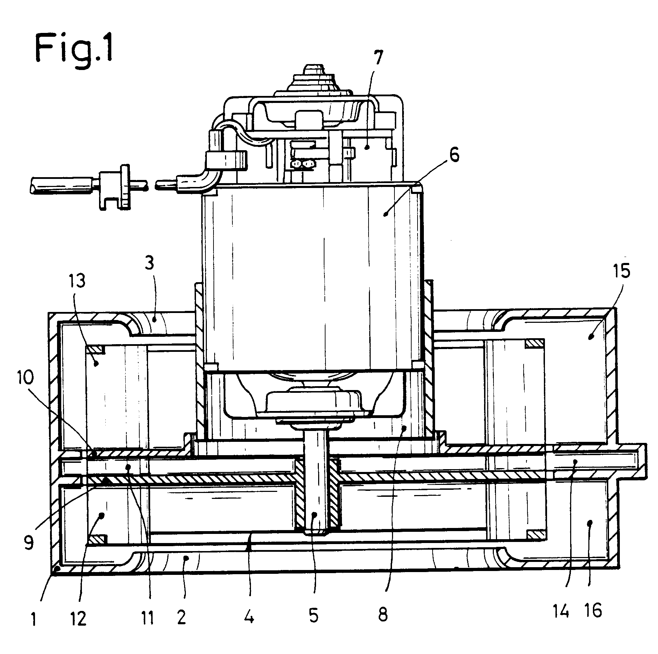

Das in Figur 1 gezeigte Gebläse hat ein Gehäuse 1, welches an seinen gegenüberliegenden Stirnseiten jeweils einen axialen Lufteinlaß 2, 3 für einen Hauptluftstrom aufweist. Im Gehäuse 1 ist ein radiales Gebläserad 4 auf einer Welle 5 angeordnet, die von einem Elektromotor 6 antreibbar ist.

Der Elektromotor 6 hat an seinem dem Gehäuse 1 abgewandten Ende einen Kühllufteintritt 7 für einen ebenfalls vom Gebläserad 4 angesaugten Kühlluftstrom, der den Elektromotor 6 durchströmt und axial in einen koaxial zum Gehäuserad 4 angeordneten Motorkühlkanal 8 des Gehäuses 1 strömt. Der Motorkühlkanal 8 trennt den Kühlluftstrom vom über dem Lufteinlaß 3 angesaugten Hauptluftstrom. Wichtig für die Erfindung ist, daß sich die beiden angesaugten Hauptluftströme und der Kühlluftstrom nicht mischen können. Hierzu hat das Gebläserad 4 zwei scheibenförmige Trennwände 9, 10, welche mit geringem Abstand parallel zueinander angeordnet sind. Die Trennwände 9, 10 teilen das Gebläserad 4 in drei Bereiche auf, nämlich einen mittleren Kühlluftförderbereich 11 und seitlich davon jeweils einen Hauptluftförderbereich 12, 13. Entsprechend der Breite des Kühlluftförderbereiches 11 und der Hauptluftförderbereiche 12, 13 ist im Gehäuse 1 das Gebläserad 4 von einem spiralförmigen Kühlluftaustritt 14 und zwei ebenfalls spiralförmigen Hauptluftaustritten 15, 16 umgeben.

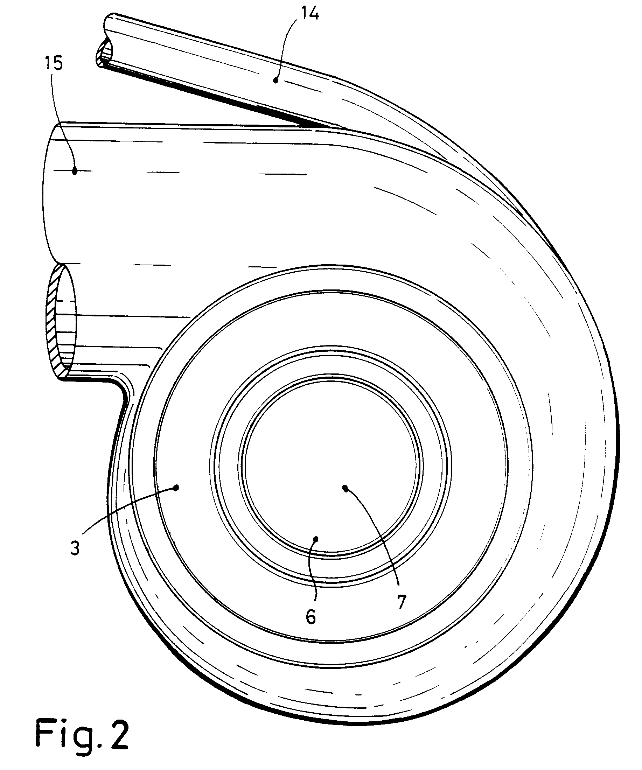

Die Figur 2 zeigt von der Seite den Hauptluftaustritt 15 und den hierzu separat verlaufenden Kühlluftaustritt 14. Diese separate Führung der Luftströme verhindert, daß es zu einer Vermischung von Kühlluft und dem Hauptluftstrom kommen kann. Weiterhin sind in Figur 2 der Elektromotor 6, der Kühllufteintritt 7 und der Lufteinlaß 3 dargestellt.

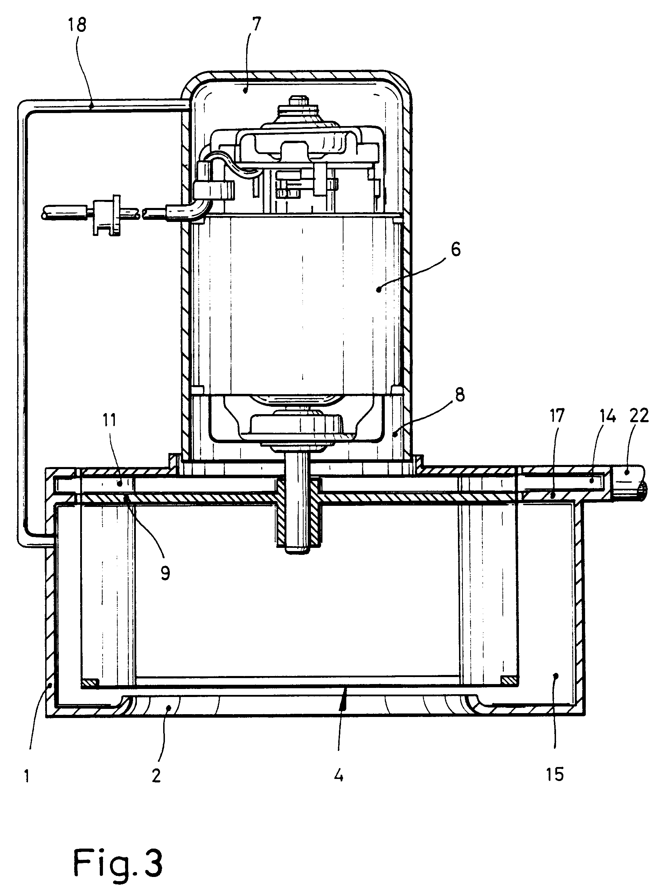

Die Ausführungsform gemäß Figur 3 unterscheidet sich von der zuvor beschriebenen Ausführungsform durch eine einflutige Gebläseausbildung. Das Gebläserad 4 hat bei dieser Ausführungsform nahe seiner elektromotorseitigen Stirnseite nur eine Trennwand 9, die den durch den Motorkühlkanal 8 des Elektromotors 6 einströmenden Kühlluftstrom vom durch den Lufteinlaß 2 einströmenden Hauptluftstrom trennt. Genau wie bei der zuvor beschriebenen Ausführungsform gelangt der Kühlluftstrom vom Motorkühlkanal 8 über den Kühlluftförderbereich 11 in den spiralförmigen Kühlluftaustritt 14, der durch eine Wand 17 vom Kühlluftaustritt 14 abgetrennt ist. Die Zufuhr der Kühlluft erfolgt bei dem Ausführungsbeispiel nach Figur 3 über eine Kühlluftleitung 18, die vom Hauptluftaustritt 15 zum Kühllufteintritt 7 des Elektromotors 6 führt.

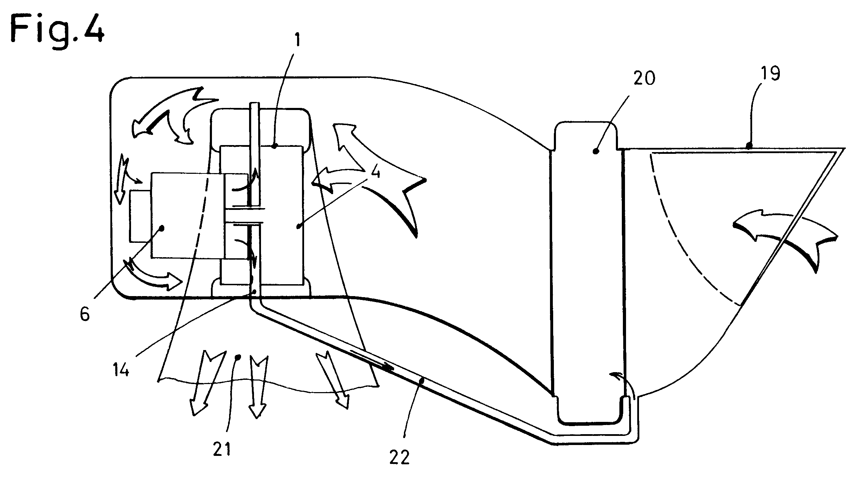

Die Figur 4 zeigt eine erfindungsgemäße Klimaanlage mit einem Lufteintritt 19, hinter dem zur Kühlung der angesaugten Luft ein Verdampfer 20 angeordnet ist. In Strömungsrichtung hinter dem Verdampfer 20 befindet sich das Gehäuse 1 mit dem Elektromotor 6 angetriebenen Gebläserad 4, durch welches ein Hauptluftstrom vom Lufteintritt 19 über den Verdampfer 20 zu einem Luftauslaß 21 gefördert wird. Wichtig für die Klimaanlage ist, daß der Kühlluftstrom vom Kühlluftaustritt 14 über eine Luftleitung 22 bis zur Einlaßseite des Verdampfers 20 zurückgeführt wird. Dadurch vermag der Verdampfer 20 die abströmende Kühlluft zu kühlen, so daß es nicht zu einer Aufwärmung der den Auslaß 21 verlassenden Luft kommen kann.

## Patentansprüche

1. Klimaanlage mit einem Gebläse, welches ein von einem Elektromotor (6) angetriebenes, in einem Gehäuse (1) angeordnetes Gebläserad (4) zur Förderung eines Hauptluftstromes von zumindest einem Lufteinlaß (2, 3; 19) zu einem Luftauslaß (15, 16; 21) und zur gleichzeitigen Förderung eines Kühlluftstromes über eine durch den Elektromotor zu einem separaten Kühlluftaustritt (14) führende Kühlluftverbindung aufweist und bei der in einem zum Lufteinlaß (2, 3; 19) führenden Luftkanal ein Verdampfer (20) zum Kühlen der angesaugten Luft angeordnet ist, **dadurch gekennzeichnet**, daß das Gebläse zumindest eine scheibenförmige Trennwand (9, 10) zur Trennung des Hauptluftstromes von dem Kühlluftstrom aufweist und von dem Kühlluftaustritt (14) eine separate Luftleitung (22) bis vor eine Einlaßseite des Verdampfers (20) führt.

2. Klimaanlage nach Anspruch 1, **dadurch gekennzeichnet**, daß das Gebläse als zweiflutiges Radialgebläse ausgebildet ist, an gegenüberliegenden Stirnseiten des Gehäuses (1) jeweils einen axialen Lufteinlaß (2, 3) für den Hauptluftstrom, an einer Stirnseite zusätzlich einen Einlaß (7) für den Kühlluftstrom aufweist und das Gebläserad (4) mit Abstand zueinander zwei scheibenförmige Trennwände (9, 10) zur Trennung eines Kühlluftförderbereiches (11) von Hauptluftförderbereichen (12, 13) aufweist, wobei in der Mantelfläche des Gehäuses (1) zwischen den Trennwänden (9, 10) der Kühlluftaustritt (14) vorgesehen ist.

## Claims

1. Air conditioning system with a fan which has a fan wheel (4) arranged in a housing (1), driven by an electric motor (6), for conveying a main air stream from at least one air inlet (2, 3; 19) to an air outlet (15, 16; 21) and for simultaneously conveying a cooling air stream via a cooling air connection through the electric motor to a separate cooling air outlet (14) and in which in an air channel leading to the air inlet (2, 3; 19) there is arranged a vaporizer (20) for cooling the sucked-in air, **characterised** in that the fan has at least one disc-like separating wall (9, 10) for separating the main air stream from the cooling air stream and from the cooling air outlet (14) a separate air duct (22) leads to the front of an inlet side of the vaporizer (20),

2. Air conditioning system according to claim 1, **characterised** in that the fan is constructed as a twin-flow radial fan, the opposite front ends of the housing (1) in each case have an axial air inlet (2, 3) for the main air stream, one front end additionally has an inlet (7) for the cooling air stream and the fan wheel (4) has two disc-shaped, spaced-apart separating walls (9, 10) for separating a cooling air conveying region (11) from the main air conveying regions (12, 13), the cooling air outlet (14) being provided in the surface area of the housing (1) between the separating walls (9, 10) of the cooling air outlet (14).

## Revendications

1. Installation de climatisation comportant un ventilateur avec une roue (4) de ventilateur disposée dans un carter (1) et entraînée par un moteur électrique (6) aux fins de transporter un flux principal d'air entre au moins une entrée d'air (2, 3; 19) et une sortie d'air (15, 16; 21) et, simultanément, d'acheminer un flux d'air de refroidissement à travers une conduite d'air de refroidissement (3) menant via le moteur électrique à une sortie (14) séparée d'air de refroidissement et dans laquelle un évaporateur (20) destiné à refroidir l'air aspiré est disposé dans la conduite menant à l'entrée d'air (2, 3; 19), caractérisée par le fait que le ventilateur comporte au moins une cloison (9, 10) de séparation en forme de plaque pour séparer le flux principal d'air du flux d'air de refroidissement et qu'une conduite d'air (22) séparée mène de la sortie (14) d'air de refroidissement jusqu'en amont de l'entrée de l'évaporateur (20).

2. Installation de climatisation selon la revendication 1, caractérisée par le fait que le ventilateur est agencé sous forme de ventilateur radial à deux étages, qu'il présente sur des faces frontales en vis-à-vis du carter (1) chaque fois une entrée d'air (2, 3) axiale pour le flux principal d'air et, en plus sur une face frontale, une entrée d'air (7) pour le flux d'air de refroidissement et que la roue de ventilateur (4) présente deux cloisons (9, 10) en forme de disques, éloignées l'une de l'autre, aux fins de séparer la zone (11) de transport de l'air de refroidissement des zones (12, 13) de transport de l'air principal, la sortie (14) d'air de refroidissement étant aménagée dans la paroi périphérique du carter (1), entre les cloisons (9, 10).
